# EUROPEAN PATENT SPECIFICATION

(11) **EP 3 813 531 B1**
(45) Date of publication and mention of the grant of the patent: **21.02.2024**
(21) Application number: 19752555.3
(22) Date of filing: 28.06.2019
(51) Int. Cl.: A01N 37/46, A01P 1/00, A01P 3/00

(54) **PEPTIDES SIMILAR TO THE NATURAL PEPTAIBOL TRICHOGIN GA IV WITH PHYTOSANITARY ACTIVITIES**
PEPTIDE MIT ÄHNLICHKEIT ZUM NATÜRLICHEN PEPTAIBOL TRICHOGIN GA IV MIT AKTIVITÄT IM PFLANZENSCHUTZ
PEPTIDES SIMILAIRES AU PEPTAIBOL NATUREL TRICHOGINE GA IV AVEC ACTIVITES PHYTOSANITAIRES

(30) Priority: 29.06.2018 IT 201800006817
(43) Date of publication of application: 05.05.2021
(73) Proprietor: Universita' Degli Studi Di Padova, 35122 Padova (IT)
(72) Inventor: DE ZOTTI, Marta, 35100 Padova (IT); FAVARON, Francesco, 35030 Veggiano (IT); SELLA, Luca, 35020 Legnaro (IT)
(74) Representative: Zaccaro, Elisabetta
(86) International application number: PCT/IB2019/055484
(87) International publication number: WO 2020/003220

(56) References cited:
- FR-A1- 2 821 241
- MARTA DE ZOTTI ET AL: "Trichogin GA IV: A versatile template for the synthesis of novel peptaibiotics", ORGANIC & BIOMOLECULAR CHEMISTRY, vol. 10, no. 6, 1 January 2012 (2012-01-01), pages 1285-1299, XP055519151, ISSN: 1477-0520, DOI: 10.1039/C1OB06178J
- REGINA TAVANO ET AL: "Comparison of bactericidal and cytotoxic activities of trichogin analogs", DATA IN BRIEF, vol. 6, 1 March 2016 (2016-03-01), pages 359-367, XP055519129, ISSN: 2352-3409, DOI: 10.1016/j.dib.2015.12.006
- C. TONIOLO ET AL: "Effect of N [alpha] -Acyl Chain Length on the Membrane-Modifying Properties of Synthetic Analogs of the Lipopeptaibol Trichogin GA IV", JOURNAL OF THE AMERICAN CHEMICAL SOCIETY, vol. 118, no. 21, 1 January 1996 (1996-01-01), pages 4952-4958, XP055120326, ISSN: 0002-7863, DOI: 10.1021/ja954081o
- MARTA DE ZOTTI ET AL: "Trichogin GA IV: an antibacterial and protease-resistant peptide", JOURNAL OF PEPTIDE SCIENCE., vol. 15, no. 9, 1 September 2009 (2009-09-01), pages 615-619, XP055519319, GB ISSN: 1075-2617, DOI: 10.1002/psc.1135
- REGINA TAVANO ET AL: "The peculiar N- and C-termini of trichogin GA IV are needed for membrane interaction and human cell death induction at doses lacking antibiotic activity", BIOCHIMICA ET BIOPHYSICA ACTA (BBA) - BIOMEMBRANES, vol. 1848, no. 1, 1 January 2015 (2015-01-01), pages 134-144, XP055519144, AMSTERDAM, NL ISSN: 0005-2736, DOI: 10.1016/j.bbamem.2014.10.005
- MARTA DE ZOTTI ET AL: "Antimicrobial lipopeptaibol trichogin GA IV: role of the three Aib residues on conformation and bioactivity", AMINO ACIDS ; THE FORUM FOR AMINO ACID AND PROTEIN RESEARCH, SPRINGER-VERLAG, VI, vol. 43, no. 4, 7 April 2012 (2012-04-07), pages 1761-1777, XP035115502, ISSN: 1438-2199, DOI: 10.1007/S00726-012-1261-7
- EMILIO MONTESINOS: "Antimicrobial peptides and plant disease control", FEMS MICROBIOLOGY LETTERS, vol. 270, no. 1, 1 May 2007 (2007-05-01), pages 1-11, XP055519269, GB ISSN: 0378-1097, DOI: 10.1111/j.1574-6968.2007.00683.x
- Stefano Sudiro: "ANALOGHI CONTENENTI LYS DEL PEPTIDE ANTIBATTERICO TRICOGINA GA IV : SINTESI E STUDI CONFORMAZIONALI.", TESI DI LAUREA SPECIALISTICA IN CHIMICA, 31 December 2009 (2009-12-31), pages 1-73, XP055519361, UNIVERSITA' DEGLI STUDI DI PADOVA, Italy Retrieved from the Internet: URL:http://tesi.cab.unipd.it/21313/1/Tesi- Stefano_Sudiro.pdf [retrieved on 2018-10-26]
- L. MADDAU ET AL: "Occurrence and characterization of peptaibols from Trichoderma citrinoviride, an endophytic fungus of cork oak, using electrospray ionization quadrupole time-of-flight mass spectrometry", MICROBIOLOGY, vol. 155, no. 10, 2 July 2009 (2009-07-02) , pages 3371-3381, XP055519258, GB ISSN: 1350-0872, DOI: 10.1099/mic.0.030916-0

## Description

### FIELD OF THE INVENTION

The invention relates to new peptides and their non-medical use as biopesticides. In particular, these peptides have been advantageously used for foliar treatment against vine peronospora (downy mildew).

### BACKGROUND

The active substances at the base of biopesticides are chemical compounds derived from plants and/or microorganisms, which act by providing good protection for crops against pests and diseases caused therefrom. These natural substances have been used to formulate biopesticides. The use of biopesticides is increasingly encouraged by the new standards that discourage the use of active substances of synthetic origin, which can be harmful to humans, animals and the environment.

The development of new products with biopesticide action is in fact regulated by directives and regulations at European Union level (for example, Dir. 2009/128/EC and Regulation 1107/2009) which underline the need to use substances that guarantee "a high level of protection of human and animal health and the environment [...], improving agricultural production" [1]. In their review [2], Villaverde et al. describe the characteristics of the ideal pesticide as conceived by the European legislation in force, suggesting the methodology to be applied to obtain the best recipe with high efficacy and minimum impact on humans, animals and the environment.

The main obstacles that hinder the development of new biopesticides are the long and expensive registration process for biocontrol agents and their non-reproducible effectiveness, due to variable climatic conditions and specific environmental factors typical of European cultivated areas [3].

Fungi belonging to the genus *Trichoderma* are biological control agents distributed worldwide and have been used successfully in field trials against many pathogens. The various secondary metabolites they produce include peptaibols, a peculiar family of peptides, which form part of their system of contrast against other microorganisms. These natural secondary metabolites are known for their ability to protect plants from parasitic attacks because: (i) they have antimicrobial properties, (ii) some act as stimulants of plant defences and (iii) they induce volatile compounds in plants that attract natural enemies of herbivorous insects [4]. Furthermore, the peptides are eco-compatible compounds degraded by enzymes with non-toxic amino acids.

Peptaibols are peptides produced by fungi in a non-ribosomal manner. Their name derives from the typical characteristics of their sequences: in fact, they are peptides rich in Aib (alpha-aminoisobutyric acid) amino acid residues and with an amino alcohol as a C-terminus group. The sequence is completed by an acyl group at the N-terminus end (a 1-octanoyl group in the case of the peptaibol trichogin GA IV). The sequence of the trichogin GA IV peptide as produced by *T. longibrachiatum* is: 1-octanoyl-Aib-Gly-Leu-Aib-Gly-Gly-Leu-Aib-Gly-Ile-Lol (SEQ ID NO: 9), where Lol is 1 ,2-amino alcohol leucinol [5].

These peptides, containing non-encoded natural amino acids, are more resistant in the open field compared to peptides formed only by the 20 encoded amino acids. Even peptaibols with a very short sequence (less than 10 residues) adopt stable helical structures, thanks to the presence of Aib residues (inductor of helical structures). This characteristic, combined with the presence of aliphatic encoded residues (therefore not photosensitive) means that the peptaibols are particularly resistant to atmospheric conditions, even extreme temperatures and radiation [6,7,8].

Phytosanitary products based on biocontrol agents from *Trichoderma* are commonly marketed and used in integrated control (for example Canna^{®}, Trichosan^{®}, Vitalin^{®}, Promot^{®}, and TrichoMax^{®}), with two main disadvantages: (1) some species of *Trichoderma* are recognised as opportunistic human pathogens and thus their use presents risks for the health of the operators, especially if immunosuppressed [9,10]; (2) biocontrol agents behave differently depending on the environmental conditions in which they are found (temperature, humidity, presence of other microorganisms), thus in the open field their effectiveness is not reproducible.

These disadvantages related to the use of biocontrol agents can be overcome by the use of their secondary metabolites, which significantly contribute to their phytosanitary activity.

Indeed, a recent study [9] has shown that the real "active ingredients" of the above-mentioned marketed products are in fact the peptide metabolites, belonging to the peptaibol family (such as trichogin GA IV).

De Zotti et al. [16] describe amino acid sequences based on trichogin GA IV, and their antimicrobial activity on *S. aureus, S. epidermis, E. coli, P. aeruginosa, C. albicans* and *T.beigelli.*

Tavano et al. [13] disclose variations of Trichogin GA IV, and the antibacterial activity increase on *S. aureus, S. epidermis, E. coli* and *P. aeruginosa,* by replacing glycine moieties with cationic lysine residues.

Some patents exist that refer to the use of mixtures of peptide congeners extracted from fungi as phystosanitary products. Patent US20060148710 describes the use of some synthetic oligopeptides which mimic peptaibols as inductors of defences in plants, while WO 2014025605, WO 2001067867 and WO 2014100612 describe extraction methods of peptaibol mixtures from fungi for use as phytosanitary products. These patents refer exclusively to mixtures of congeners extracted just as they are produced by fungi. However, there is no real market for these products (which are made up of non-purified mixtures of peptides produced by fungi), for three reasons: (1) the peptide composition of these mixtures produced by fungi varies with varying environmental conditions (temperature, humidity) with which the fungus produces them and therefore their effectiveness is not reproducible; (2) the use of a mixture necessarily involves the diffusion of useless materials in the environment, given that not all the components of the mixture are active as agropharmaceuticals; (3) the peptides produced by the *Trichoderma* species are not usually very soluble in water. This means that while the *Trichoderma* is effective in transporting its metabolite to the target (which is the parasite's hypa when the fungus is carrying out the hyperparasitic action, or is the plant cell if it is acting as a stimulant of defences), the operator who wants to directly distribute the peptides on crops is much less sure of reaching the targets.

When these peptide mixtures are dissolved in water to be used in the treatment of crops, a suspension is in fact formed with consequent non-homogeneous delivery issues which are not easily overcome, even with the use of adjuvants (such as for example surfactants).

The particular difficulty in developing the most effective and active phytosanitary composition in the various environmental conditions, together with the impediments in obtaining peptides that can be effectively dissolved in water to allow the homogeneous distribution of the product on the vegetation [6,11], have limited the application of these products as biopesticides.

The object of the present invention is therefore to provide new peptides derived from peptaibols to be used as phytosanitary products. These peptides can be obtained in pure form, not as mixtures of congeners, and do not have the disadvantages noted above for the known peptides for the same application.

### SUMMARY OF THE INVENTION

The invention therefore relates to the non-medical use of a peptide or of its salts, said peptide having the sequence: 1-octanoyl-Aib-X-Lys(HCl)-Leu-Y-Z
wherein:
X is chosen from the group consisting of:
   - Gly-Leu-Aib-Lys(HCl)-;
   - Gly-Leu-Aib-Gly-; and
   -Lys(HCl)-.
or is missing
Y is the group:
   -Aib-Gly-Ile- or is missing
   and
Z is chosen from the group consisting of:
   - Lol; and
   - Leu-NH₂
wherein said peptide is chosen from the group consisting of:
   1-octanoyl-Aib-Gly-Leu-Aib-Lys(HCl)-Lys(HCl)-Leu-Aib-Gly-Ile-Leu-NH₂ (SEQ ID NO:2),
   1-octanoyl-Aib-Gly-Leu-Aib-Gly-Lys(HCl)-Leu-Aib-Gly-Ile-Leu-NH₂ (SEQ ID NO:4) ,
   1-octanoyl-Aib-Gly-Leu-Aib-Lys(HCl)-Lys(HCl)-Leu-Lol (SEQ ID NO:5),
   1-octanoyl-Aib-Gly-Leu-Aib-Lys(HCl)-Lys(HCl)-Leu-Leu-NH₂ (SEQ ID NO:6), or
   1-octanoyl-Aib-Lys(HCl)-Lys(HCl)-Leu-Aib-Gly-Ile-Leu-NH₂ (SEQ ID NO:7); and
wherein said use as a pesticide is against plant and crop pathogenic oomycetes or fungi.

In particular, these peptides are "biopesticides" and the invention consists in the application of these biopesticides in the treatment against various phytopathogenic organisms including *Plasmopora viticola,* a causal agent of the disease known as vine peronospora, or downy mildew.

In the present invention, when pesticide or biopesticide is indicated, it means an active substance on pests or plant or crop pathogens such as: fungi, oomycetes, bacteria, spores, microorganisms, insects, mites, nematodes; preferably said pesticide is an antimicrobial and fungicide.

The peptides described are synthetic analogues of the natural peptide trichogin GA IV, peptide of the "peptaibol" family produced in mixtures with other congener peptides from the fungus *Trichoderma longibrachiatum* as part of its contrast system against other microorganisms.

The peptides according to the present invention offer the following advantages: (1) they are used in purified form, while up to now biopesticides have been non-purified "natural extracts", whose composition varies according to the process with which they are obtained from the natural matrix; (2) they are water-soluble and therefore allow an effective delivery and are easy to use; (3) they are stable against solar radiation and (4) to date there are no eco-compatible alternatives against target pathogens, in particular *Plasmopara viticola.*

### DESCRIPTION OF THE DRAWINGS

The invention will now be described in detail and with reference to the attached Figures. It is noted that only figures referring to PEP4-rink, K6-rink, PEP4-corto, PEP4-corto1-rink and PEP4-corto2-rink do relate to subject-matter according to the invention.

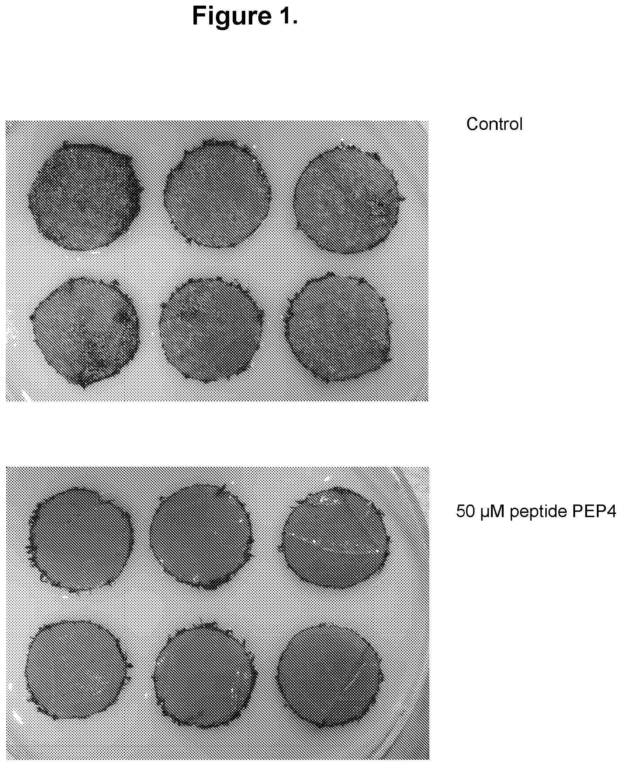

Figure 1: **PEP4** versus *Plasmopara viticola.* The figure shows the photographs of portions (disks) of treated vine leaves (with PEP4) and untreated vine leaves (control) 15 days after inoculation with sporangia of the pathogen *P. viticola.* Unlike the control leaves - which were successfully infected by the pathogen as seen from the formation of necrotic areas and from the production of sporangia clearly visible on the surface of the leaves - the disks of leaves treated with the peptaibol called **PEP4** (and with the sequence Oct-Aib-Gly-Leu-Aib-Lys(HCl)-Lys(HCl)-Leu-Aib-Gly-Ile-Lol SEQ ID NO:1) are healthy. Therefore, **PEP4** at a concentration of 50 µM (aqueous solution) almost completely prevents both the development of the disease and the production of sporangia for 15 days (duration of the experiment).

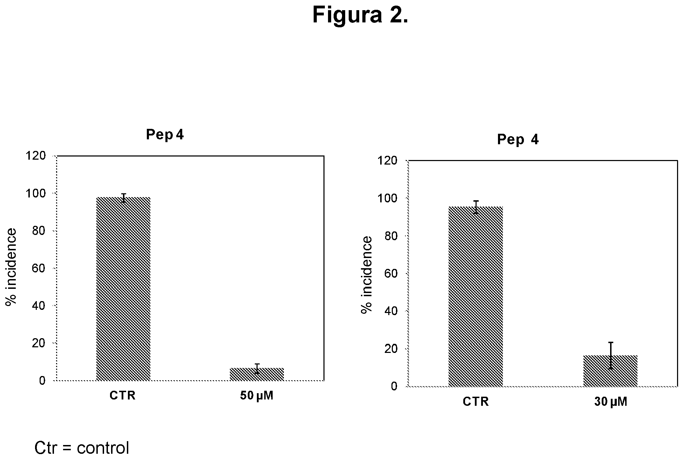

Figure 2: **PEP4** versus *Plasmopara viticola.* The figure shows the effect of the treatment with **PEP4** (SEQ ID NO: 1) administered at two concentrations (30 or 50 µM) on disks of vine leaves inoculated with sporangia of *Plasmopara viticola.* The histogram represents the average incidence (± standard error) of infections from P. *viticola* 12 days after inoculation obtained by performing at least 3 independent biological replicates. At a concentration of 30 µM, the incidence of the disease is <20%. The incidence is calculated as a percentage ratio of the leaf disks showing the sporulation of the pathogen compared to the total of inoculated disks.

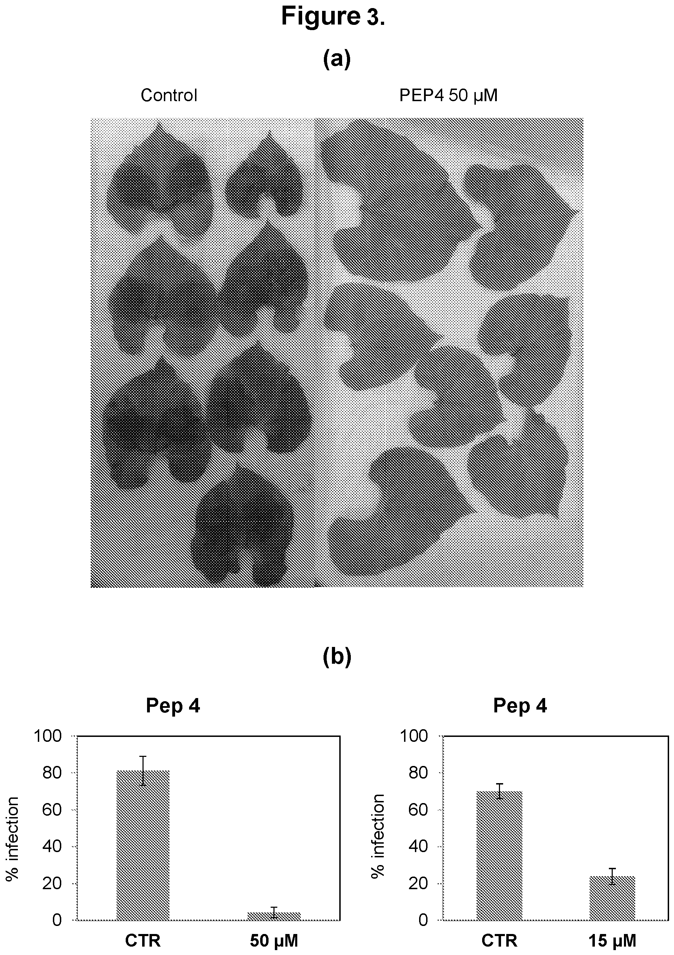

Figure 3: **PEP4** versus *Botrytis cinerea.* Figure 3 shows the protection activity of **PEP4** (SEQ ID NO: 1) against *Botrytis cinerea* on bean leaves. (a) The photo shows the disease symptoms on bean leaves 7 days after inoculation with the fungus (untreated control and leaves treated with the peptide **PEP4).** (b) The histogram represents the average incidence (± standard error) of infections from *B. cinerea 7* days after inoculation obtained by performing at least 3 independent biological replicates. **PEP4** protects the bean leaves against the infection caused by *Botrytis cinerea* for at least seven days (duration of the experiment) at a concentration of 50 µM (aqueous solution).

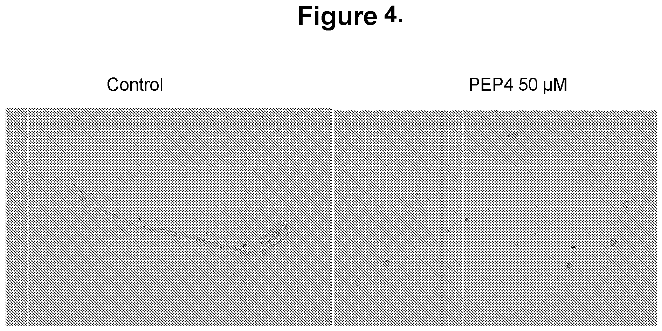

Figure 4: **PEP4** versus *Botrytis cinerea.* The figure shows the effect of the treatment on the germination of conidia of *B. cinerea* (5×10⁵/ml in PDB 1X phosphate buffer) with 50 µM **PEP4** (SEQ ID NO:1). The germination of the conidia is not observed in the treated sample.

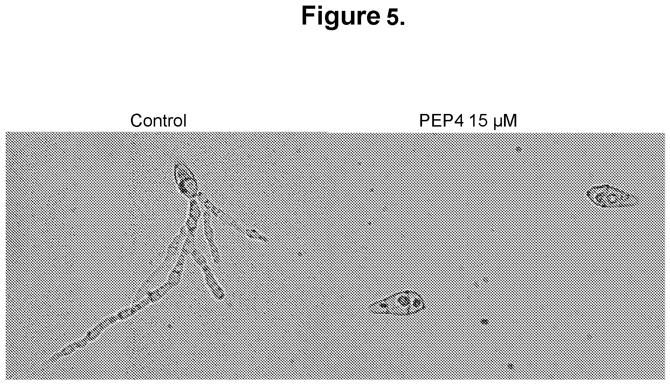

Figure 5: **PEP4** versus *Pyricularia oryzae.* Effect of treatment on the germination of conidia of *P. oryzae* (5×10⁵/ml in PDB 1X phosphate buffer) with 15 µM of **PEP4.** Figure 5 shows the capacity of the peptide **PEP4** (SEQ ID NO:1) to effectively inhibit the spore germination of the pathogenic fungus *Pyricularia oryzae* for at least seven days (duration of the experiment);

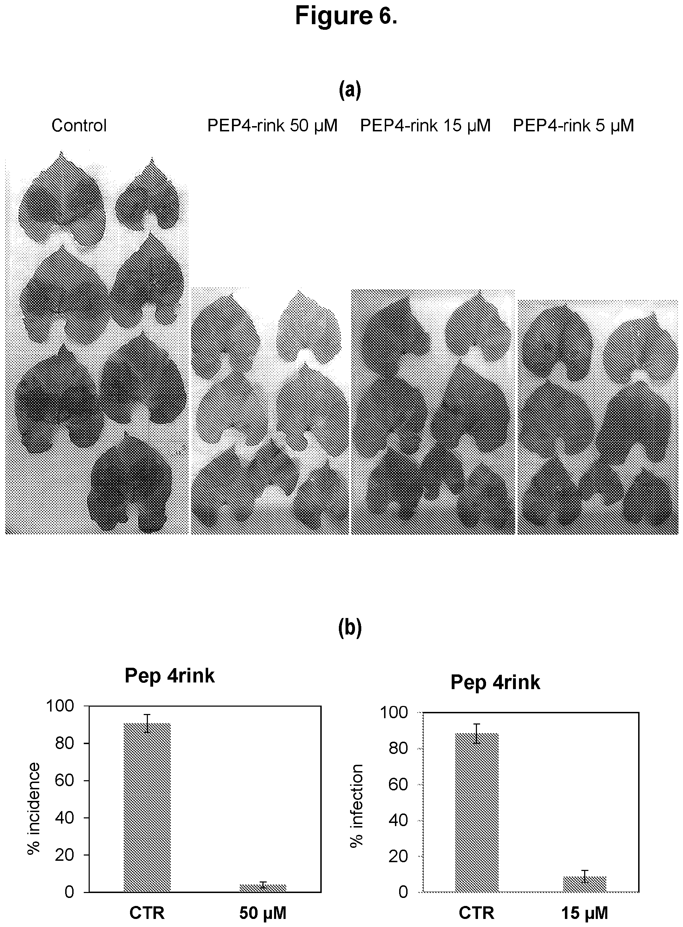

Figure 6: **PEP4-rink** versus *Botrytis cinerea.* Figure 6 shows: (a) the bean leaves 7 days after the inoculation with *Botrytis cinerea,* treated with the peptide **PEP4-rink** (SEQ ID NO:2) at different concentrations (5, 15 and 50 µM) compared with the untreated control. (b) At a concentration of 15 µM **PEP4-rink** reduces the incidence of rot symptoms from *B. cinerea* on bean leaves by 90%. At a concentration of 50 µM **PEP4-rink** reduces the incidence of rot symptoms from *B. cinerea* by 95%.

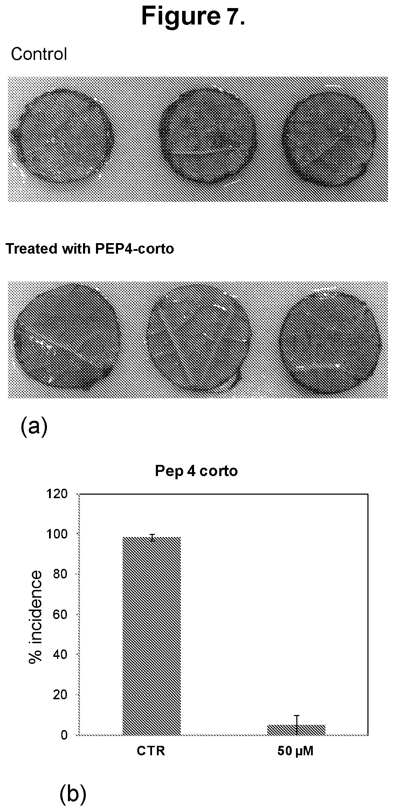

Figure 7: **PEP4-corto** versus *P. viticola.* Figure 7 shows the photographs of disks of vine leaves treated with the peptaibol called **PEP4-corto** (and with the sequence Oct-Aib-Gly-Leu-Aib-Lys(HCl)-Lys(HCl)-Leu-Lol, SEQ ID NO: 5) and inoculated with sporangia of the pathogen *P. viticola* **(a).** Unlike the control leaves successfully infected by the pathogen (which reproduces by producing sporangia which are clearly visible on the surface of the leaves), the treated leaves did not produce sporangia after more than 7 days from the inoculation. Figure 7 also shows the effectiveness of **PEP4-corto** at 50 µM in containing the incidence of infection from *Plasmopara viticola.* In particular, the histogram **(b)** represents the average incidence (± standard error) of infections from *P. viticola* obtained by performing at least 3 independent biological replicates.
   Therefore, **PEP4-corto** at a concentration of 50 µM (aqueous solution) almost completely prevents the development of the disease and the production of sporangia for 7 days (duration of the experiment).

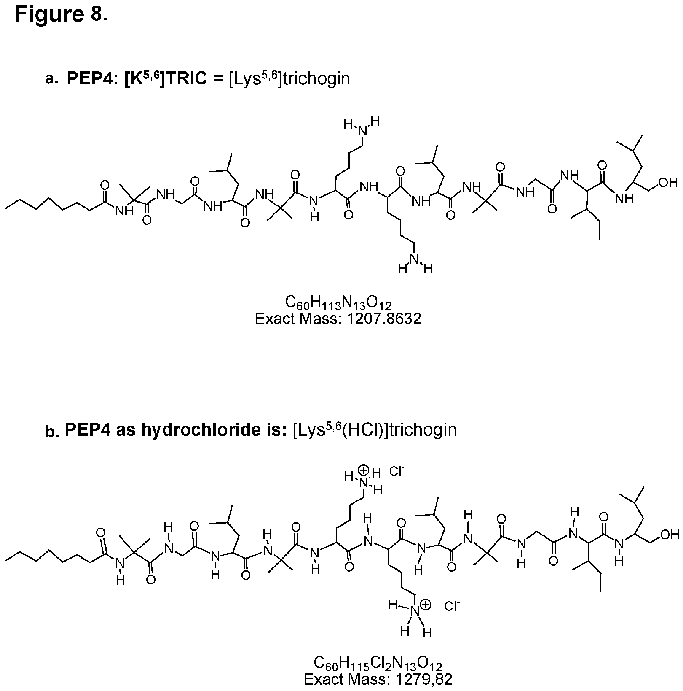

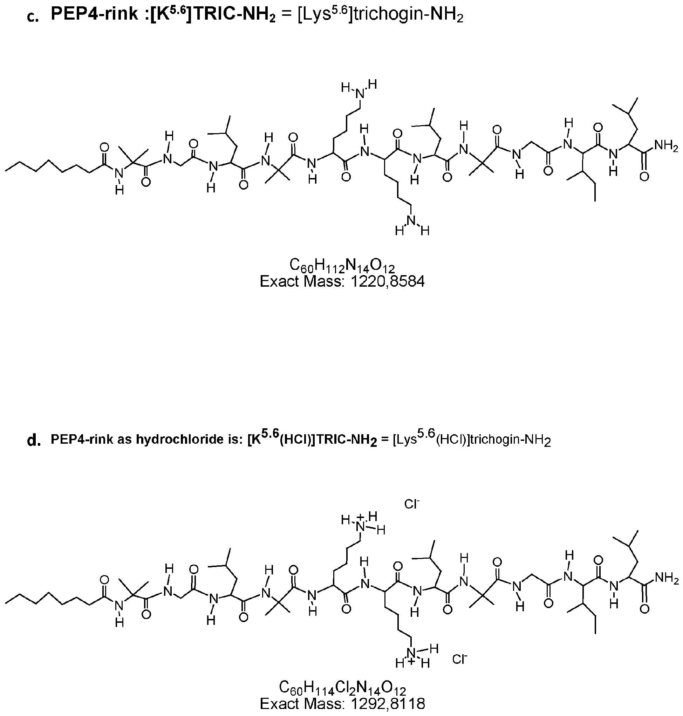

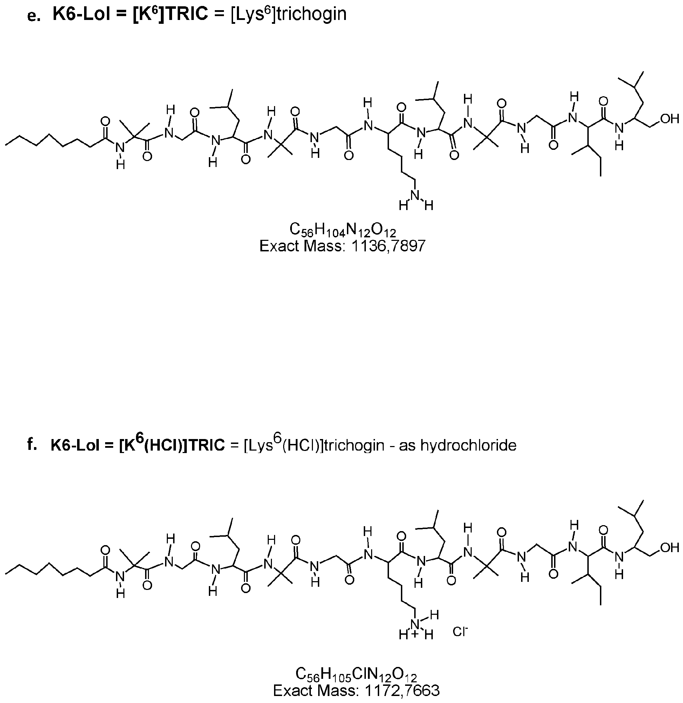

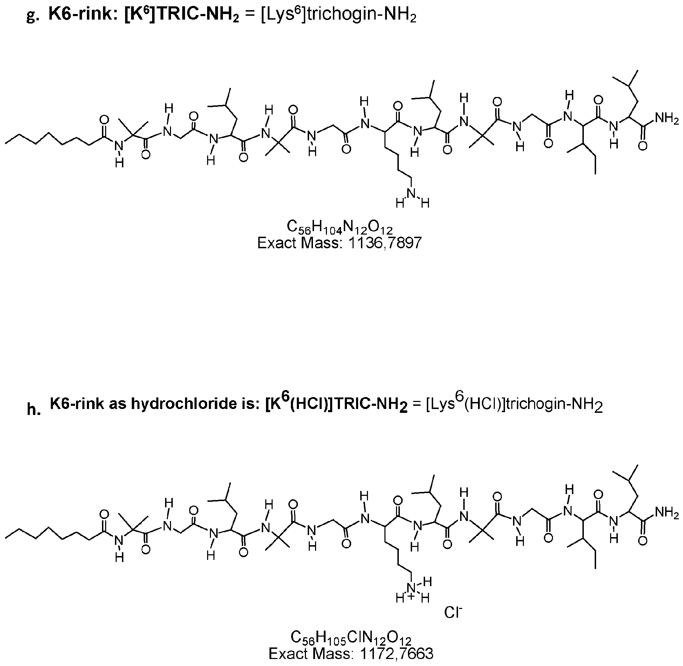

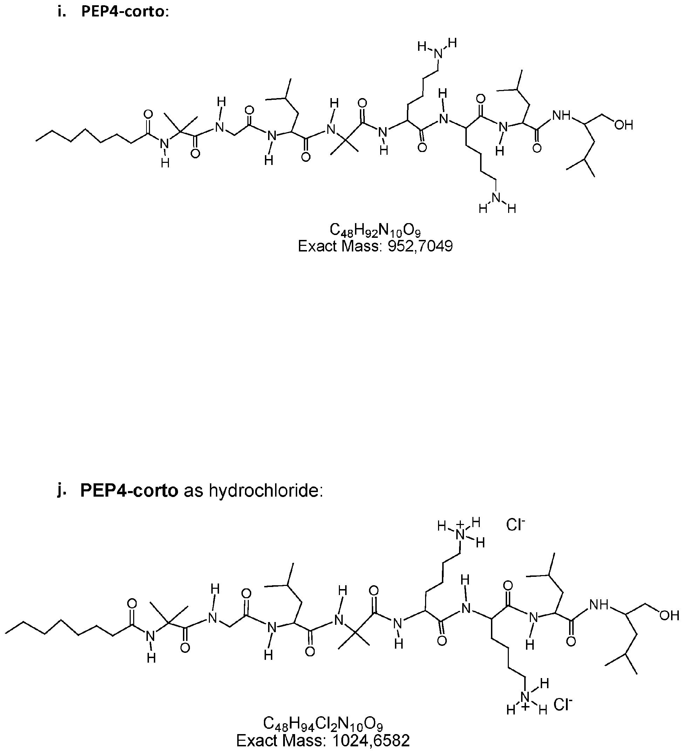

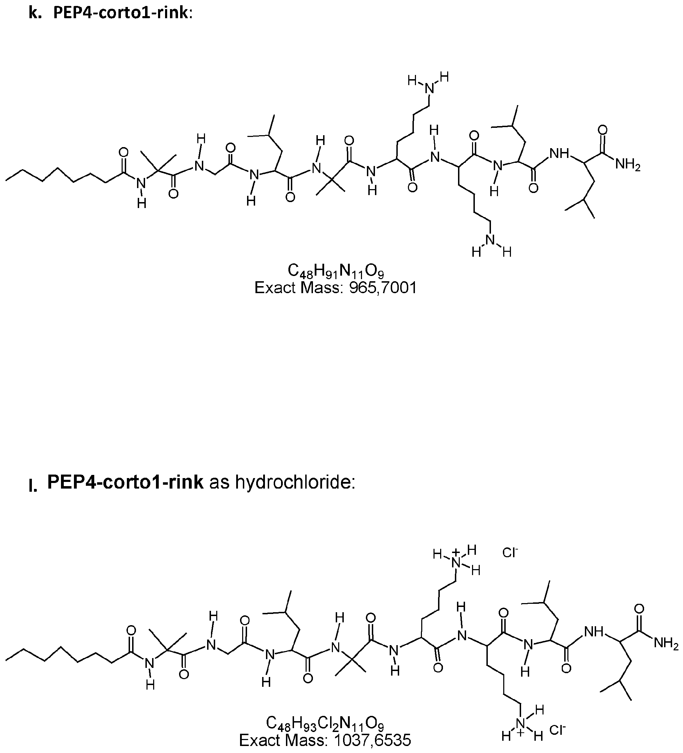

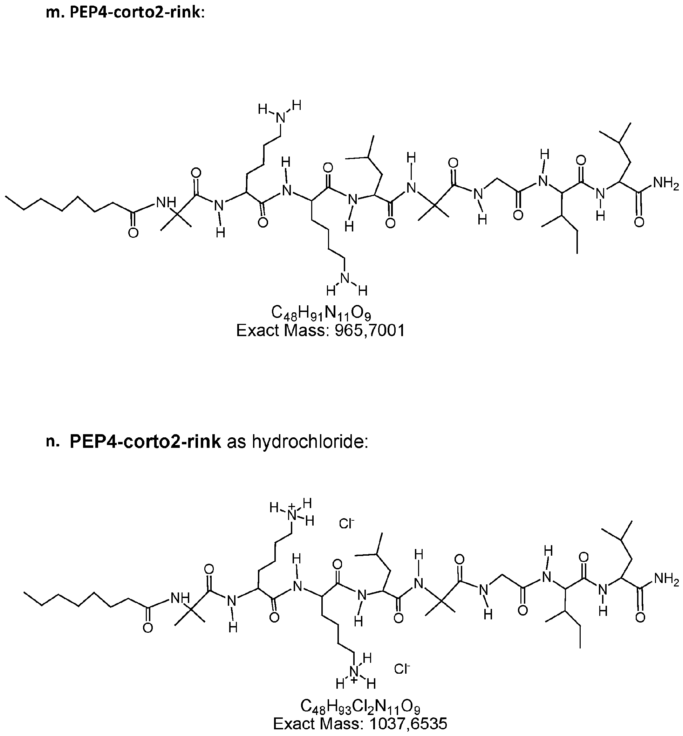

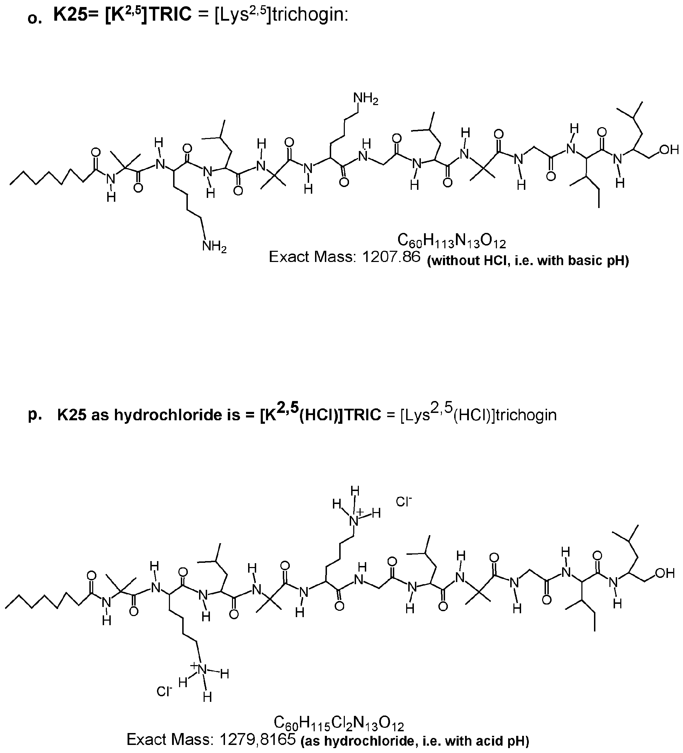

Figure 8: The structural formulas of the peptides according to the invention and further peptides for reference are reported below, both in their hydrochloride form and in their neutral form. In particular, the following are reported: a. PEP4 (for reference): [K^{5,6}]TRIC = [Lys^{5,6}]trichogin, b. PEP4 as hydrochloride (for reference) is: [Lys^{5,6}(HCl)]trichogin, c. PEP4-rink (according to the invention): [K^{5,6}]TRIC-NH₂ = [Lys^{5,6}]trichogin-NH₂, d. PEP4-rink as hydrochloride is: [K^{5,6}(HCl)]TRIC-NH₂ = [Lys^{5,6}(HCl)]trichogin-NH₂, e. K6-Lol (for reference) = [K⁶]TRIC = [Lys⁶]trichogin, f. K6-Lol as hydrochloride (for reference) is: [K⁶(HCl)]TRIC = [Lys⁶(HCl)]trichogin g. K6-rink: [K⁶]TRIC-NH₂ = [Lys⁶]trichogin-NH₂, h. K6-rink as hydrochloride is: [K⁶(HCl)]TRIC-NH₂ = [Lys⁶(HCl)]trichogin-NH₂, i. PEP4-corto non hydrochloride, j. PEP4-corto as hydrochloride, k. PEP4-corto1-rink non hydrochloride, I. PEP4-corto1-rink as hydrochloride, m. PEP4-corto2-rink non hydrochloride, n. PEP4-corto2-rink as hydrochloride, o. K25 (for reference) = [K^{2,5}]TRIC = [Lys^{2,5}]trichogin, p. K25 as hydrochloride (for reference) [K^{2,5}(HCl)]TRIC = [Lys^{2,5}(HCl)]trichogin.

### DETAILED DESCRIPTION OF THE INVENTION

The invention relates to the non-medical use of a peptide or of its salts as pesticides, said peptide having the sequence:
1-octanoyl-Aib-X-Lys(HCl)-Leu-Y-Z
wherein:
X is chosen from the group consisting of:
   - Gly-Leu-Aib-Lys(HCl)-;
   - Gly-Leu-Aib-Gly-; and
   -Lys(HCl)-,
or X is missing
Y is the group:
   -Aib-Gly-Ile- or Y is missing
   and
Z is chosen from the group consisting of:
   - Lol; and
   - Leu-NH₂,
wherein said peptide is chosen from the group consisting of:
   1-octanoyl-Aib-Gly-Leu-Aib-Lys(HCl)-Lys(HCl)-Leu-Aib-Gly-Ile-Leu-NH₂ (SEQ ID NO:2),
   1-octanoyl-Aib-Gly-Leu-Aib-Gly-Lys(HCl)-Leu-Aib-Gly-Ile-Leu-NH₂ (SEQ ID NO:4) ,
   1-octanoyl-Aib-Gly-Leu-Aib-Lys(HCl)-Lys(HCl)-Leu-Lol (SEQ ID NO:5),
   1-octanoyl-Aib-Gly-Leu-Aib-Lys(HCl)-Lys(HCl)-Leu-Leu-NH₂ (SEQ ID NO:6), or
   1-octanoyl-Aib-Lys(HCl)-Lys(HCl)-Leu-Aib-Gly-Ile-Leu-NH₂ (SEQ ID NO:7); and
wherein said use as a pesticide is against plant and crop pathogenic oomycetes or fungi.

In the present invention, when "Lys(HCl)" is used, it is intended as comprising the amino acid lysine in its hydrochloride form in a side chain, having the advantage of greater hydrophilicity and giving amphiphilicity to the three-dimensional helical structure of the peptides. This amino acid can be substituted with the amino acid lysine (Lys).

These peptides are biopesticides derived from biological based control molecules. In the present invention when the following definitions are used:
- "1-octanoyl-" is intended as comprising the acyl group derived from octanoic acid and bound to the N-terminus end of the peptide;
- "-Aib-" is intended as comprising the non-encoded natural amino acid: alpha-aminoisobutyric acid;
- "Lol" is intended as comprising the 1,2-amino alcohol L-leucinol.

All the other amino acids are described with their three-letter code: Gly = glycine, Leu = leucine, Ile = isoleucine. All chiral amino acids are L-shaped if not specified.

The peptides can be used alone or in combination and can be prepared in the form of a composition. They can be prepared as an aqueous solution and can be dissolved together with substances adapted to prolong their persistence or adhesion to plant surfaces.

The peptides according to the present invention are very active with respect to oomycetes and parasitic fungi of plants.

In particular the peptides of the invention are pesticides, more specifically biopesticides, effective both alone and in combination with the fungi *Botrytis cinerea, Penicillium italicum, Penicillium digitatum, Penicillium expansum, Fusarium graminearum, Pyricularia oryzae (sin. Magnaporthe oryzae)* and the oomycete *Plasmopara viticola.*

*Botrytis cinerea* is a fungus of the family Sclerotiniaceae, a pest that attacks many plant species, even though one of the most economically important hosts is vines (in particular it attacks the ripening bunches of grapes). In viticulture, the disease caused by this pathogen is commonly known as grey mould.

*Plasmopara viticola* is a microorganism belonging to the class of oomycetes, originating in America and widespread throughout Europe, which causes a typical grapevine disease called vine peronospora, or downy mildew, with a cycle strongly conditioned by climatic conditions. Today this is one of the most widespread and harmful diseases of the vine in many Italian regions and throughout the world.

*Penicillium* is a genus of fungus with interesting implications in the agri-food sector. In particular, peptides are active on *Penicillium italicum, Penicillium digitatum, Penicillium expansum,* pathogens typically responsible for rot in fruits such as citrus and pome fruits. *P. expansum* is also a producer of the mycotoxin patulin, toxic to humans.

The peptides according to the present invention are very active against diseases of cultivated plant species. In particular, it has been shown that these peptides, used alone or in combination, are active against the diseases of important fruit and vegetable crops.

Advantageously, the peptides of the invention have proved to be active against grapevine diseases, in particular such peptides are active in the treatment of vine peronospora, one of the most serious diseases of the vine, and of grey mould.

To date there are no agents for biocontrol solutions that have been approved for use nor under development against vine peronospora.

The products currently used in the integrated fight against vine botrytis and peronospora are limited both in the number of treatments granted per year, in time before the harvest, and in the maximum permitted quantities.

The peptides according to the present invention have been tested *in vitro* (alone or in combination) against the fungi *Botrytis cinerea* and *Penicillium spp.,* considered worldwide as the some of the most significant agents of deterioration of fruit and vegetables, and *Plasmopara viticola,* the agent of vine peronospora, the most damaging grapevine disease in temperate climates.

Advantageously, in addition to being active against the pests responsible for the most common diseases of fruit crops, vines and horticultural crops, the peptides described here are also environmentally friendly. In fact, they are biodegradable into non-toxic amino acids. The analogues of the trichogin GA IV which is the object of the invention are short-sequence peptides also containing non-encoded natural amino acids. For this reason, they are more resistant to enzymatic degradation than the peptides formed only by proteinogenic amino acids. In fact, in contact with proteolytic enzymes trichogin and its analogues have shown a half-life even five times greater than "traditional" peptides. This makes it possible to obtain more durable crop protection action compared to similar peptides containing only encoded amino acids. In any case, the peptides described here are degraded within a few days, turning into amino acids which, in turn, represent sources of nitrogen for the soil (the peptides are transformed into nitrogen fertilisers). Furthermore, the peptides developed by the proponents are water-soluble and this allows the use of small quantities and the avoidance of aerosols and dispersions. The peptides are effective at a concentration of about 50 micromolar, but offer excellent protection even at lower concentrations. The use of these compounds for protection against diseases in the field is a sustainable approach to crop protection, and therefore it is possible to use these compounds also through repeated treatments, without causing damage to humans, animals and the environment.

As indicated in the summary of the invention, the peptides of the invention are analogues of the natural trichogin peptide GA IV, belonging to the peptaibol family.

These peptaibols derive from fungi of the genus Trichoderma which, as natural biological agents, have an efficacy in the field which is strongly influenced by environmental factors and can have harmful effects on the health of end users (consumers and users).

In fact, the anticryptogamic efficacy of the preparations based on fungi of the genus Trichoderma and of the mixtures of metabolites therefrom [12] have a low reproducibility, poor water-solubility [10,11] and can present risks for the health of agricultural operators if immunosuppressed (some fungi of the species Trichoderma are known opportunistic pathogens) [9,10]. Furthermore, there is a dispersion of useless material in the environment, linked to the use of non-purified mixtures.

The analogues of the natural peptide trichogin GA IV described herein maintain and in various cases amplify the effectiveness of the natural peptide but do not present its disadvantages, and administered at low micromolar concentrations block spore germination and the growth of the mycelium of B. *cinerea* and prevent the infection of vine leaves from *P. viticola.*

These peptides are water-soluble, therefore easy to apply, they are non-toxic, therefore they do not present any risk to the health of the end users (operators and consumers), they have a wide range of effectiveness before being degraded to non-toxic amino acids, therefore not impacting the ecosystem, they are stable at extreme temperature, radiation and pH conditions and are therefore suitable for application in the open field and are potentially applicable even close to the moment of fruit harvesting [7,8].

The invention relates to the non-medical use of peptides as pesticides having the sequence
1-octanoyl-Aib-X-Lys(HCl)-Leu-Y-Z
wherein:
X is chosen from the group consisting of:
   - Gly-Leu-Aib-Lys(HCl)-;
   - Gly-Leu-Aib-Gly-;
   -Lys(HCl)-;
or X is missing;
Y is the group:
   -Aib-Gly-Ile- or is missing
   and
Z is chosen from the group consisting of:
   - Lol; and
   - Leu-NH₂,
wherein said peptide is chosen from the group consisting of:
   1-octanoyl-Aib-Gly-Leu-Aib-Lys(HCl)-Lys(HCl)-Leu-Aib-Gly-Ile-Leu-NH₂ (SEQ ID NO:2),
   1-octanoyl-Aib-Gly-Leu-Aib-Gly-Lys(HCl)-Leu-Aib-Gly-Ile-Leu-NH₂ (SEQ ID NO:4) ,
   1-octanoyl-Aib-Gly-Leu-Aib-Lys(HCl)-Lys(HCl)-Leu-Lol (SEQ ID NO:5),
   1-octanoyl-Aib-Gly-Leu-Aib-Lys(HCl)-Lys(HCl)-Leu-Leu-NH₂ (SEQ ID NO:6), or
   1-octanoyl-Aib-Lys(HCl)-Lys(HCl)-Leu-Aib-Gly-Ile-Leu-NH₂ (SEQ ID NO:7); and
wherein said use as a pesticide is against plant and crop pathogenic oomycetes or fungi.

In a preferred aspect, the peptides of the invention have a sequence wherein X is - Gly-Leu-Aib-Lys(HCl)-.

The peptides mentioned in the following are as follows:
1-octanoyl-Aib-Gly-Leu-Aib-Lys(HCl)-Lys(HCl)-Leu-Aib-Gly-Ile-Lol (SEQ ID NO:1) or "PEP4",
1-octanoyl-Aib-Gly-Leu-Aib-Lys(HCl)-Lys(HCl)-Leu-Aib-Gly-Ile-Leu-NH₂ (SEQ ID NO:2) or "PEP4-rink",
1-octanoyl-Aib-Gly-Leu-Aib-Gly-Lys(HCl)-Leu-Aib-Gly-Ile-Lol (SEQ ID NO:3), or "K6-Lol"
1-octanoyl-Aib-Gly-Leu-Aib-Gly-Lys(HCl)-Leu-Aib-Gly-Ile-Leu-NH₂ (SEQ ID NO:4) or "K6-rink",
1-octanoyl-Aib-Gly-Leu-Aib-Lys(HCl)-Lys(HCl)-Leu-Lol (SEQ ID NO:5) or "PEP4-corto",
1-octanoyl-Aib-Gly-Leu-Aib-Lys(HCl)-Lys(HCl)-Leu-Leu-NH₂ (SEQ ID NO:6) or "PEP4-corto1-rink", and
1-octanoyl-Aib-Lys(HCl)-Lys(HCl)-Leu-Aib-Gly-Ile-Leu-NH₂ (SEQ ID NO:7) or "PEP4-corto2-rink", and
1-octanoyl-Aib-Lys(HCl)-Leu-Aib-Lys(HCl)-Gly-Leu-Aib-Gly-Ile-Lol (SEQ ID NO:8) or "K25".

Of these only the peptides according to SEQ ID NO:2, SEQ ID NO:4, SEQ ID NO:5, SEQ ID NO:6 and SEQ ID NO:7 are according to the invention.

The other peptides mentioned are for reference only. Hence, the claimed invention relates to peptides having the sequence:
- 1-octanoyl-Aib- Gly-Leu-Aib-Lys(HCl)-Lys(HCl)-Leu-Aib-Gly-Ile-Leu-NH₂ (SEQ ID NO:2);
- 1-octanoyl-Aib-Gly-Leu-Aib-Gly-Lys(HCl)-Leu-Aib-Gly-Ile-Leu-NH₂ (SEQ ID NO:4);
- 1-octanoyl-Aib-Gly-Leu-Aib-Lys(HCl)-Lys(HCl)-Leu-Lol (SEQ ID NO:5);
- 1-octanoyl-Aib-Gly-Leu-Aib-Lys(HCl)-Lys(HCl)-Leu-Leu-NH₂ (SEQ ID NO:6); and
- 1-octanoyl-Aib-Lys(HCl)-Lys(HCl)-Leu-Aib-Gly-Ile-Leu-NH₂ (SEQ ID NO:7).

Reference is made to a peptide having the sequence 1-octanoyl-Aib-Gly-Leu-Aib-Lys (HCl) -Lys (HCl) -Leu-Aib-Gly-Ile-Lol (SEQ ID NO:1) also identified as "PEP4". This peptide and its use are not according to the claimed invention. It peptide is also non-haemolytic [13, 14, 15]. In contact with human digestive enzymes, all these peptides are completely degraded to non-toxic amino acids within half an hour [16].

All these peptides have shown excellent activity both *in vitro* (spore germination assays of B. *cinerea* and *Penicillium* spp. with resazurin) and *in vivo* against target pathogens. At a concentration of 50 µM they completely inhibit the formation of P. *viticola* sporangia with protection that goes beyond 14 days (duration of the experiment).

These peptides are perfectly water-soluble and synthesised in the laboratory by means of an automatic solid phase synthesis technique with excellent yields and a high degree of purity.

The present invention has also been obtained thanks to the results produced within the project financed by the Italian Ministry of Education, University and Research (MIUR) in the context of the Futuro in Ricerca 2013 call (code: RBFR13RQXM) attributed to the inventor Dr Marta De Zotti as National Coordinator. The research that led to the present invention was also funded through the University project (University of Padua, prot. CPDA135891, year 2013), title "Identification by high-throughput screening of natural molecules able to reduce grey mold disease in *Vitis vinifera"* attributed to the inventor Francesco Favaron.

The following examples of embodiments of the present invention are given below by way of illustration.

### EXAMPLES

### Example 1:

### Peptide preparation

The peptides are synthesised following a manual, semi-automatic or automatic solid phase synthesis method. An example of a synthetic protocol used (optimised by the inventor) has been published [16]. The resins used are: "Rink amidica" resin or 2-chlorotritil resin pre-charged with the amino alcohol L-leucinol; both are commercial and used at 100-200 or 200-400 mesh and different degrees of loading. The synthesis proceeds starting from the C-terminus amino acid towards the N-terminus amino acid with a step-by-step procedure. The protocol foresees the use of the fluorenylmethyloxycarbonyl- (Fmoc-) protecting group for the protection of the amino group in alpha. This protecting group is removed in basic conditions, for example by treatment with piperidine (PIP) 20% in dimethylformamide (DMF) or other secondary amines in different percentages and in other organic solvents. The protecting group used for the protection of the amino group in the side chain is tert-butyloxycarbonyl (Boc), removable by acid treatment, for example with a solution of HCl 3M in methanol or other organic solvents, or trifluoroacetic acid in different percentages in dichloromethane or other organic solvents.

The formation reactions of the amide bond take place through activation of the carboxyl group of the incoming amino acid (protected at its amine function and possible side chains) through the use of different activating agents depending on the amino acid. By way of non-exhaustive example, the following is used: (i) a 1:1 mixture of 1-hydroxy-1,2,3-benzotriazole (HOBt) and O-(benzotriazol-1-yl)-1,1,3,3-tetramethyluronium hexafluoro phosphate (HBTU); (ii) a 1:1 mixture of 1-hydroxy-1,2,3-benzotriazole (HOBt) and O-(benzotriazol-1-yl)-1,1,3,3-tetramethyluronium tetrafluoroborate (TBTU); (iii) O-(7-azabenzotriazol-1-yl) -1,1,3,3-tetramethyluronium hexafluorophosphate (HATU); (iv) ethyl cyano(hydroxyimino)acetate (Oxyma pure); (v) K-Oxyma; (vi) a 1:1 mixture of N-ethyl-*N*'-(3-dimethylamino)propylcarbodiimide (EDC) or diisopropylcarbodiimide (DIC) or dicyclohexylcarbodiimide (DCC) and HOBt; (vii) a 1:1 mixture of EDC or DIC or DCC and HOAt; always in DMF solution. The incoming amino acid excess varies between 1.5 and 3 equivalents and the activating reactants are added in an equimolar quantity with respect to the incoming amino acid. The tertiary base is added in twice the amount of the incoming amino acid when HATU or HBTU are agents used as activators. The basic addition is not necessary with OXYMA PURE or K-Oxyma. Diisopropylethylamine, triethylamine, or N-methylmorpholine can be used as a tertiary base (by way of non-limiting example). The group *n*-octanoyl is inserted at the N-terminus end using the same methods of activation of the carboxylic group previously described. The formation reactions of the amide bond also occur through the use of the enzyme PAPAINE. The peptide is released from the resin, previously dried with dichloromethane washes and permanence in vacuum, by acid treatment. By way of example: from the resin "Rink amidica", the peptide can be released by treatment with a mixture of trifluoroacetic acid (TFA) 95%, water 2.5% and triisopropylsilane 2.5%. The collected solution is brought to dryness. The solid or oily precipitate obtained is then washed several times with diethyl ether; from the 2-chlorotritilic resin, the peptide is released with repeated treatments of variable duration from one hour to overnight with a solution of 1,1,1,3,3,3-hexafluoroisopropanol (HFIP) 30% in dichloromethane (DCM). Alternatively, a solution with various percentages of TFA in DCM is also used. When using the 2-chlorotritilic resin, the Boc protecting group is removed in solution by the treatments described above. By way of example, by treatment with hydrochloric acid 3M in methanol. In some cases, the protected Boc peptides are purified by aqueous acid and/or basic washes, followed by anhydrification on anhydrous Na₂SO₄ or MgSO₄.

The crude peptides are obtained with a degree of purity greater than 70% and purified at >95% by chromatography. Examples of purification techniques used are: flash chromatography on silica; semi-automatic medium-pressure chromatography (for example using the Isolera Prime instrument from Biotage); preparative highpressure liquid chromatography (HPLC). The characterisation of the peptides and the determination of the degree of purity are obtained by high-resolution mass spectrometry analysis (electron spray ionization time-of-fly, ESI-TOF), analytical HPLC, nuclear magnetic resonance (NMR). Yields obtained: between 70% and 95%.

The peptides are soluble in water at a concentration >10mM (tested limit). They are also soluble in various polar or protic organic solvents.

The peptides have been tested for their resistance to enzymatic degradation. They were resistant to the proteolytic action of non-specific proteases (*pronase*)*,* while they were completely degraded to amino acids by the action of the enzyme trypsin.

### Example 2

### In vitro assays

*B. cinerea* spore viability assays with resazurin blue dye: the experiments were conducted in microtiter plate wells each containing 2 × 10⁵ spores ml⁻¹, 200 µl of potato dextrose broth (PDB) pH 6.85, 68 µg ml⁻¹ of resazurin vital dye (Sigma, Milan, Italy) and variable concentrations of peptides. Resazurin, an active component of the Alamar Blue tincture, is reduced and tends to pink in the presence of actively growing cells. Cell growth was assessed by measuring the absorbance at 578 nm at various times from inoculation.

**Table 1 List of effective in vitro peptides in inhibiting the germination of fungal spores with respect to the untreated control for at least 3 days.**

| Phytopathogenic fungus | Peptide | Concentration |
|---|---|---|
| *Botrytis cinerea* | **PEP4** | 3 µM |
| | **PEP4-rink** | 3 µM |
| | **PEP4-corto** | 3 µM |
| | **K6-Lol** | 15 µM |
| *Penicillium expansum* | **PEP4** | 15 µM |
| | **PEP4-rink** | 15 µM |
| | **K6-Lol** | 15 µM |
| *Penicillium digitatum* | **PEP4** | 15 µM |
| | **PEP4-rink** | 15 µM |
| | **K6-Lol** | 15 µM |
| | **K25** | 15 µM |
| *Penicillium italicum* | **Pep4-corto1-rink** | 15 µM |
| | **PEP4** | 15 µM |
| | **Pep4-corto2-rink** | 15 µM |
| *Pyricularia oryzae* | **PEP4** | 15 µM |
| *Fusarium graminearum* | **PEP4-rink** | 15 µM |

The peptide **PEP4** (comparative, for reference only) at 3 µM inhibits spore germination of *B. cinerea* for at least 7 days (duration of the experiment).

The peptide **PEP4-rink** at 15 µM inhibits spore germination of *B. cinerea* for at least 21 days (duration of the experiment) and at 3 µM for at least 14 days (duration of the experiment). At a concentration of 50 µM **PEP4-rink** reduces the incidence of rot symptoms from *B. cinerea* on vine leaves by 70%.

The peptide **PEP4-corto** at 15 µM inhibits spore germination of B. *cinerea* for at least 8 days (duration of the experiment).

The peptide **K6-Lol** (comparative, for reference only) at 15 µM inhibits spore germination of B. *cinerea* and *P. italicum* for at least 7 days (duration of the experiment).

Furthermore, preliminary results indicate that the peptide **Pep4-corto1-rink** at 15 µM inhibits spore germination of *Penicillium italicum, P. digitatum* and *P. expansum* for 6 days; the peptide **Pep4-corto2-rink** at 15 µM inhibits spore germination of *Penicillium italicum, P. digitatum* and *P. expansum* for 15 days (duration of the experiment) and spores of B. *cinerea* for 8 days (duration of the experiment).

### Example 3

### In vivo assays

a) Disks of cv. Glera vine leaves were inoculated with sporangia from the oomycete *Plasmopara viticola,* the causal agent of vine peronospora. The disks infected and then treated with peptides were incubated at 20/22 °C in conditions of high humidity (>92% RH) and in the dark (optimal conditions for the development of the disease) until the end of the experiment.

The effectiveness of the peptides **PEP4** (for reference only), **PEP4-rink, PEP4-corto** and **K6-Lol** (for reference only) at different concentrations in reducing the incidence of infections from *P. viticola* on disks of vine leaves is shown in the Figures annexed to the present invention.

Furthermore, preliminary tests with the peptide **K25** (for reference only) at 50 µM showed a reduction in the incidence of *P. viticola* of about 85%.

b) Bean leaves were inoculated at two points with 2 × 10⁵ spores ml⁻¹ of *Botrytis cinerea.* The leaves infected and then treated with the peptides were incubated at 20/22 °C in conditions of high humidity until the end of the experiment.

The effectiveness of the peptides **PEP4** or **PEP4-rink** at different concentrations in reducing the incidence of infections from *B. cinerea* on bean leaves is reported in the Figures attached to the present invention. Furthermore, preliminary tests with **PEP4-corto, K25** or **K6-Lol** at 50 µM showed a reduction in the incidence of disease from *B. cinerea in vivo* of around 85-90%. Furthermore, at a concentration of 15 µM, **PEP4-corto** completely inhibits the spores of *B. cinerea* for 8 days (duration of the experiment).

### Example 4

### Phytosanitary activity in vivo and/or in vitro

Table 2 shows the phytosanitary activity data obtained *in vivo* and/or *in vitro* with **PEP4-corto1-rink** (SEQ ID NO:6), **PEP4-corto2-rink** (SEQ ID NO:7), **K6-Lol** (SEQ ID NO:3, for reference only), **K25** (SEQ ID NO:8, for reference only) and **PEP4-corto** (SEQ ID NO:5):

**Table 2 Phytosanitary activity data in vitro and/or in vivo of some peptides.**

| **PEPTIDE** | **Phytosanitary activity data** |
|---|---|
| **PEP4-corto1-rink** | Preliminary results indicate that the peptide **Pep4-corto1-rink** at 15 µM inhibits spore germination of *Penicillium italicum, P. digitatum* and *P. expansum* for 6 days (duration of the experiment) |
| **PEP4-corto2-rink** | The peptide **Pep4-corto2-rink** at 15 µM inhibits spore germination of *Penicillium italicum, P. digitatum* and *P. expansum* for 15 days (duration of the experiment) and spores of *B. cinerea* for 8 days (duration of the experiment). |
| **K6-Lol** | The peptide **K6-Lol** at 15 µM inhibits spore germination of *B. cinerea* and *P. italicum* for at least 7 days (duration of the experiment). Furthermore, preliminary tests on bean leaves with **K6-Lol** at 50 µM demonstrated a reduction in the incidence of *B. cinerea* by 90%. |
| **PEP4-corto** | At a concentration of 15 µM, **PEP4-corto** completely inhibits the spores of *B. cinerea* for 8 days (duration of the *in vitro* experiment). Moreover, *in vivo* tests on bean leaves with **PEP4-corto** at 50 µM demonstrated a reduction in the incidence of *B. cinerea* by 85%. |
| **K25** | At a concentration of 50 µM, **K25** reduces the development of sporangia of *P. viticola* by 85%. At a concentration of 15 µM, **K25** inhibits the germination of *Penicillium digitatum* for more than 5 days (duration of the experiment). |

From the detailed description and from the examples reported above, the advantages achieved by the peptides of the present invention are evident. In particular, the peptides according to the claims have demonstrated being exceptionally and advantageously suitable as biopesticides both alone and in combination, and have the characteristics of being non-toxic, being stable in open field conditions and being biodegradable.

### BIBLIOGRAPHICAL REFERENCES

[1] Regulation (EC) No. 1107/2009 of the European Parliament and of the Council of 21 October 2009 concerning the placing of plant protection products on the market and repealing Council Directives 79/117/EEC and 91/414/EEC. European Commission, Brussels, Belgium (2009).
[2] Villaverde J.J., et. al., Biopesticides from natural products: current development, legislative framework, and future needs. BioResources 11, 5618 (2016).
[3] Lamichhane J.R., et al. Pest. Manag. Sci. (2017) 73: 14.
[4] Vos C. M. F., De Cremer, K., Cammue, B. P. A., et al. The toolbox of Trichoderma spp. in the biocontrol of Botrytis cinerea disease, Mol. Plant Pathol., 16, 400-412 (2015): "A number of reports have indicated that also peptaibols and other secondary metabolites produced by Trichoderma spp. can elicit plant defence responses, in addition to their direct antifungal activity (Engelberth et al., 2001; Vinale et al., 2008; Viterbo et al., 2007)".
[5] Peggion C., Formaggio F., Crisma M., Epand R.F., Epand R.M., Toniolo C., Trichogin: a paradigm for lipopeptaibols, J Pept Sci., 9, 679-689 (2003).
[6] in: "Peptaibiotics" e "Peptaibiotics II", a cura di Toniolo C. e Brückner H., casa editrice: John Wiley & Sons.
[7] Stabilità termica: Biochemistry 1995, 34, 2566; Biopolymers (Pept.Sci.) 2001, 60, 396. Stabilità a valori estremi di pH: Org. Biomol. Chem. 2012, 10, 1285.
[8] De Zotti M., Biondi B., Formaggio F., Toniolo C.,Stella L., Park Y., Hahm K.-S., Trichogin GA IV: an antibacterial and protease-resistant peptide, J. Pept. Sci., 15, 615-619 (2009).
[9] Degenkolb T., Fog Nielsen K., Dieckmann R., Branco-Rocha F., Chaverri P., Samuels G.J., Thrane U., von Döhren H., Vilcinskas A., Brückner H., Peptaibol, secondary-metabolite, and hydrophobin pattern of commercial biocontrol agents formulated with species of the Trichoderma harzianum complex, Chem. Biodivers., 12, 662-684 (2015).
[10] Kredics L., et al.: "Trichoderma". In: "The Molecular Detection of Human Fungal Pathogens" (Liu D, ed.), CRC Press, Taylor & Francis Group, London, pp. 509-526, 2011.
[11] Database sui peptaibolici: N.K. Neumann, N. Stoppacher, S. Zeilinger, T. Degenkolb, H. Bruckner, R. Schuhmacher The peptaibiotics database-a comprehensive online resource. Chem. Biodivers., 12, 743-751 (2015).
[12] Zeilinger S., Gruber S., Bansal R., Mukherjee P. K., Secondary metabolism in Trichoderma - Chemistry meets genomics (Review). Fungal biology reviews 30, 74-90 (2016): " [...] production of these substances (peptaibols) is species- and even strain-dependent and not the whole repertoire will be biosynthesized by a given fungus under laboratory conditions as specific triggering stimuli may be required".
[13] Tavano R., Malachin G., De Zotti M., Peggion C., Biondi B., Formaggio F., Papini E., The peculiar N- and C-termini of trichogin GA IV are needed for membrane interaction and human cell death induction at doses lacking antibiotic activity, BBA-Biomembranes, 1848, 134-144 (2015).
[14] Tavano R., Malachin G., De Zotti M., Peggion C., Biondi B., Formaggio F., Papini E., Comparison of bactericidal and cytotoxic activities of trichogin analogs, Data in Brief, 6, 359-367 (2016).
[15] Dalzini A., Bergamini C., Biondi B., De Zotti M., Panighel G., Fato R., Peggion C., Bortolus M., Maniero A.M., The rational search for selective anticancer derivatives of the peptide Trichogin GA IV: a multi-technique biophysical approach, Sci. Rep., 24000 (2016).
[16] De Zotti M., Biondi B., Peggion C., Formaggio F., Park Y., Hahm K.-S., Toniolo C., Trichogin GA IV: a versatile template for the synthesis of novel peptaibiotics, Org. Biomol. Chem., 10, 1285-1299 (2012).

## Claims

1. Non-medical use of a peptide or of its salt as a pesticide, said peptide having the sequence
1-octanoyl-Aib-X-Lys(HCl)-Leu-Y-Z
wherein:
X is chosen from the group consisting of:
- Gly-Leu-Aib-Lys(HCl)-;
- Gly-Leu-Aib-Gly-; and
-Lys(HCl)-;
or X is missing
Y is the group:
-Aib-Gly-Ile- or Y is missing
and
Z is chosen from the group consisting of:
- Lol; and
- Leu-NH₂,
wherein said peptide is chosen from the group consisting of:
1-octanoyl-Aib-Gly-Leu-Aib-Lys(HCl)-Lys(HCl)-Leu-Aib-Gly-Ile-Leu-NH₂ (SEQ ID NO:2),
1-octanoyl-Aib-Gly-Leu-Aib-Gly-Lys(HCl)-Leu-Aib-Gly-Ile-Leu-NH₂ (SEQ ID NO:4) ,
1-octanoyl-Aib-Gly-Leu-Aib-Lys(HCl)-Lys(HCl)-Leu-Lol (SEQ ID NO:5),
1-octanoyl-Aib-Gly-Leu-Aib-Lys(HCl)-Lys(HCl)-Leu-Leu-NH₂ (SEQ ID NO:6), or
1-octanoyl-Aib-Lys(HCl)-Lys(HCl)-Leu-Aib-Gly-Ile-Leu-NH₂ (SEQ ID NO:7); and
wherein said use as a pesticide is against plant and crop pathogenic oomycetes or fungi.

2. The non-medical use according to claim 1 wherein said peptide is a pesticide towards *Botrytis cinerea, Penicillium spp.* and *Plasmopara viticola*, alone or in combination.

3. The non-medical use according to anyone of claims 1 or 2 wherein said peptide is active against plant deterioration by *Botrytis cinerea, Penicillium spp.* and *Plasmopara viticola.*

4. The non-medical use according to claim 4 wherein said plants are fruit or vegetable plants.

5. The non-medical use according to claim 1 wherein said peptide is active against vine deterioration by *Botrytis cinerea, Penicillium spp.* and *Plasmopara viticola.*

6. The non-medical use according to claim 1 wherein said peptide is active against vine peronospora (Downy mildew).

7. A peptide of sequence:
- 1-octanoyl-Aib- Gly-Leu-Aib-Lys(HCl)-Lys(HCl)-Leu-Aib-Gly-Ile-Leu-NH₂ (SEQ ID NO:2);
- 1-octanoyl-Aib-Gly-Leu-Aib-Gly-Lys(HCl)-Leu-Aib-Gly-Ile-Leu-NH₂ (SEQ ID NO:4);
- 1-octanoyl-Aib-Gly-Leu-Aib-Lys(HCl)-Lys(HCl)-Leu-Lol (SEQ ID NO:5);
- 1-octanoyl-Aib-Gly-Leu-Aib-Lys(HCl)-Lys(HCl)-Leu-Leu-NH₂ (SEQ ID NO.:6); or
- 1-octanoyl-Aib-Lys(HCl)-Lys(HCl)-Leu-Aib-Gly-Ile-Leu-NH₂ (SEQ ID NO:7).

## Patentansprüche

1. Nichtmedizinische Verwendung eines Peptids oder seines Salzes als Pestizid, wobei das Peptid die Sequenz
1-Octanoyl-Aib-X-Lys(HCl)-Leu-Y-Z aufweist,
wobei:
X ist ausgewählt aus der Gruppe bestehend aus:
- Gly-Leu-Aib-Lys(HCl)-;
- Gly-Leu-Aib-Gly-; und
- Lys(HCl)-;
oder X fehlt
Y die Gruppe ist:
- Aib-Gly-Ile- oder Y fehlt
und
Z ausgewählt ist aus der Gruppe bestehend aus:
- Lol; und
- Leu-NH₂,
wobei das Peptid ausgewählt ist aus der Gruppe bestehend aus:
1-Octanoyl-Aib-Gly-Leu-Aib-Lys(HCl)-Lys(HCl)-Leu-Aib-Gly-Ile-Leu-NH2 (SEQ ID NO:2),
1-Octanoyl-Aib-Gly-Leu-Aib-Gly-Lys(HCl)-Leu-Aib-Gly-Ile-Leu-NH₂ (SEQ ID NO:4),
1-Octanoyl-Aib-Gly-Leu-Aib-Lys(HCl)-Lys(HCl)-Leu-Lol (SEQ ID NO:5),
1-Octanoyl-Aib-Gly-Leu-Aib-Lys(HCl)-Lys(HCl)-Leu-Leu-NH₂ (SEQ ID NO:6), oder
1-Octanoyl-Aib-Lys(HCl)-Lys(HCl)-Leu-Aib-Gly-Ile-Leu-NH₂ (SEQ ID NO:7); und wobei die Verwendung als Pestizid gegen pflanzen- und erntepathogene Oomyceten oder Pilze erfolgt.

2. Nichtmedizinische Verwendung nach Anspruch 1, wobei das Peptid ein Pestizid gegen *Botrytis cinerea, Penicillium spp.* und *Plasmopara viticola,* allein oder in Kombination, ist.

3. Nicht-medizinische Verwendung nach einem der Ansprüche 1 oder 2, wobei das Peptid gegen Pflanzenschädigung durch *Botrytis cinerea, Penicillium spp.* und *Plasmopara viticola* wirksam ist.

4. Nichtmedizinische Verwendung nach Anspruch 4, wobei die Pflanzen Obst- oder Gemüsepflanzen sind.

5. Nicht-medizinische Verwendung nach Anspruch 1, wobei das Peptid gegen die Schädigung von Reben durch *Botrytis cinerea, Penicillium spp.* und *Plasmopara viticola* wirksam ist.

6. Nicht-medizinische Verwendung nach Anspruch 1, wobei das Peptid gegen Rebenperonospora (Falscher Mehltau) wirksam ist.

7. Peptid der Sequenz:
- 1-Octanoyl-Aib- Gly-Leu-Aib-Lys(HCl)-Lys(HCl)-Leu-Aib-Gly-Ile-Leu-NH₂ (SEQ ID NO:2);
- 1-Octanoyl-Aib-Gly-Leu-Aib-Gly-Lys(HCl)-Leu-Aib-Gly-Ile-Leu-NH₂ (SEQ ID NO:4);
- 1-Octanoyl-Aib-Gly-Leu-Aib-Lys(HCl)-Lys(HCl)-Leu-Lol (SEQ ID NO:5);
- 1-Octanoyl-Aib-Gly-Leu-Aib-Lys(HCl)-Lys(HCl)-Leu-Leu-NH₂ (SEQ ID NO:6); oder
- 1-Octanoyl-Aib-Lys(HCl)-Lys(HCl)-Leu-Aib-Gly-Ile-Leu-NH₂ (SEQ ID NO:7).

## Revendications

1. Utilisation non médicale d'un peptide ou de son sel comme pesticide, ledit peptide ayant la séquence suivante
1-octanoyl-Aib-X-Lys(HCl)-Leu-Y-Z
dans lequel :
X est choisi dans le groupe constitué de :
- Gly-Leu-Aib-Lys(HCl)- ;
- Gly-Leu-Aib-Gly- ; et
- Lys(HCl)- ;
ou X est manquant
Y est le groupe :
- Aib-Gly-Ile- ou Y est manquant
et
Z est choisi dans le groupe constitué de :
- Lol ; et
- Leu-NH₂,
dans lequel ledit peptide est choisi dans le groupe constitué de :
1-octanoyl-Aib-Gly-Leu-Aib-Lys(HCl)-Lys(HCl)-Leu-Aib-Gly-Ile-Leu-NH2 (SEQ ID NO:2),
1-octanoyl-Aib-Gly-Leu-Aib-Gly-Lys(HCl)-Leu-Aib-Gly-Ile-Leu-NH₂ (SEQ ID NO:4),
1-octanoyl-Aib-Gly-Leu-Aib-Lys(HCl)-Lys(HCl)-Leu-Lol (SEQ ID NO:5),
1-octanoyl-Aib-Gly-Leu-Aib-Lys(HCl)-Lys(HCl)-Leu-Leu-NH₂ (SEQ ID NO:6), ou
1-octanoyl-Aib-Lys(HCl)-Lys(HCl)-Leu-Aib-Gly-Ile-Leu-NH₂ (SEQ ID NO:7) ; et dans lequel ladite utilisation comme pesticide vise à lutter contre les oomycètes ou les champignons pathogènes des plantes et des cultures.

2. Utilisation non médicale selon la revendication 1, dans laquelle ledit peptide est un pesticide contre *Botrytis cinerea, Penicillium spp.* et *Plasmopara viticola,* seul ou en combinaison.

3. Utilisation non médicale selon l'une quelconque des revendications 1 ou 2, dans laquelle ledit peptide est actif contre la détérioration des plantes par *Botrytis cinerea, Penicillium spp.* et *Plasmopara viticola.*

4. Utilisation non médicale selon la revendication 4, dans laquelle lesdites plantes sont des fruits ou des légumes.

5. Utilisation non médicale selon la revendication 1, dans laquelle ledit peptide est actif contre la détérioration de la vigne par *Botrytis cinerea, Penicillium spp.* et *Plasmopara viticola.*

6. Utilisation non médicale selon la revendication 1, dans laquelle ledit peptide est actif contre la péronospora de la vigne (mildiou).

7. Peptide de séquence :
- 1-octanoyl-Aib- Gly-Leu-Aib-Lys(HCl)-Lys(HCl)-Leu-Aib-Gly-Ile-Leu-NH₂ (SEQ ID NO:2) ;
- 1-octanoyl-Aib-Gly-Leu-Aib-Gly-Lys(HCl)-Leu-Aib-Gly-Ile-Leu-NH₂ (SEQ ID NO:4) ;
- 1-octanoyl-Aib-Gly-Leu-Aib-Lys(HCl)-Lys(HCl)-Leu-Lol (SEQ ID NO:5) ;
- 1-octanoyl-Aib-Gly-Leu-Aib-Lys(HCl)-Lys(HCl)-Leu-Leu-NH₂ (SEQ ID NO:6) ; ou
- 1-octanoyl-Aib-Lys(HCl)-Lys(HCl)-Leu-Aib-Gly-Ile-Leu-NH₂ (SEQ ID NO:7).
